# EUROPÄISCHE PATENTANMELDUNG

(11) **EP 1 712 826 A1**
(43) Veröffentlichungstag der Anmeldung: **18.10.2006**
(21) Anmeldenummer: 06007627.0
(22) Anmeldetag: 11.04.2006
(51) Int. Cl.: F16L 23/032, F16L 23/026, F16L 23/18

(54) **Flanscharmatur und Verwendung einer solchen Flanscharmatur**

(30) Priorität: 11.04.2005 DE 102005016199
(71) Anmelder: Dipl.-Ing. K. Dietzel GmbH, 04626 Beerwalde (DE)
(72) Erfinder: Kortüm, Jens, 07554 Kauern (DE); Baumrucker, Rolf, 07549 Gera (DE)
(74) Vertreter: Tilmann, Max Wilhelm

(57) **Zusammenfassung**

Die Erfindung betrifft eine Armatur mit einem Durchflußrohr (1) und einem Flansch (2) zum Verbinden des ersten Endes des Durchflußrohrs mit einem angrenzenden Bauteil, wobei der Flansch (2) mindest ein Langloch (6) für ein Befestigungsmittel zum Befestigen des Flansches an dem angrenzenden Bauteil aufweist.

## Beschreibung

Die Erfindung betrifft eine Armatur und insbesondere die Verwendung einer derartigen Armatur zum Verbinden einer Leitung mit einer Pumpe, insbesondere mit einer Zahnradpumpe.

Armaturen weisen ein Durchflußrohr auf. In einer Baugruppe der Armaturen ist ein Flansch vorgesehen, mit dem das Durchflußrohr mit einem angrenzenden Bauteil, beispielsweise einer Zahnradpumpe, verbunden werden kann. Dabei weist der Flansch Angriffspunkte für Befestigungsmittel, insbesondere Durchgangslöcher für Schrauben, auf. Insbesondere bei Zahnradpumpen hat sich ein Industriestandard herausgebildet, gemäß dem Zahnradpumpen festgelegte Anordnungen von Befestigungslöchem an einem pumpenseitigen Flansch vorgesehen werden (sog. "Lochkreis"), zu dem die Durchgangslöcher für die Befestigungsschrauben der Armatur entsprechend ausgebildet werden.

Bei der Befestigung einer Armatur mit einem angrenzenden Bauteil, insbesondere bei dem vorbeschriebenen Befestigen einer Armatur mit einer Zahnradpumpe, besteht das Problem, daß die armaturseitigen Angriffspunkte für die Befestigungsmittel in einem vorbestimmten, festen Verhältnis zu Angriffspunkten für die Befestigungsmittel seitens des angrenzenden Bauteils ausgerichtet werden müssen. So muß beispielsweise das Durchgangsloch in einem armaturseitigen Flansch in Deckung mit der pumpseitigen Gewindebohrung gebracht werden, um den armaturseitigen Flansch mit einer Schraube an der angrenzenden Pumpe festschrauben zu können.

EP 0 831 265 B1 befaßt sich mit diesem Problem. Dort wird eine Flanscharmatur zum Befestigen an einer Zahnradpumpe vorgeschlagen. Um die Armatur in beliebiger Ausrichtung mit dem angrenzenden Bauteil verbinden zu können, wird gemäß EP 0 831 265 B1 ein Flansch vorgesehen, der relativ zum Durchflußrohr um mindestens 360° in beide Umfangsrichtungen um seine Längsachse beweglich ist. Die Armatur kann nun in einer beliebigen Drehwinkelausrichtung an das angrenzende Bauteil angesetzt werden und der frei rotierbare Flansch in eine Position rotiert werden, in der die Durchgangslöcher des Flansches in Deckung mit den pumpseitigen Gewindelöchern ausgerichtet sind, so daß die Schrauben zur Befestigung der Armatur an der angrenzenden Pumpe angebracht werden können.

Die aus EP 0 831 265 B1 bekannte Armatur ist aufwendig herzustellen. So ist gemäß EP 0 831 265 B1 neben dem Durchflußrohr und dem Flansch zusätzlich ein hülsenartiges Abschlußteil vorzusehen, das erst mit dem Durchflußrohr verbunden werden kann, wenn der Flansch auf das Durchflußrohr aufgeschoben wurde, da das hülsenartige Abschlußteil den Flansch in gesicherter Form gegenüber dem Übergangsbereich halten soll, und zwar in dem das Abschlußteil eine nach außen sich konisch erweiternde Umfangsfläche aufweist, die gegenüber einer ebenfalls konisch ausgebildeten inneren Umfangsfläche des Flansches so dimensioniert ist, daß der Flanschbereich einerseits in Umfangsrichtung drehbeweglich ist und andererseits eine definierte axiale Beweglichkeit gegenüber dem Durchflußrohr aufweist, also in seiner axialen Beweglichkeit durch das Abschlußteil auf der einen Seite begrenzt wird.

Vor diesem Hintergrund liegt der Erfindung die Aufgabe zugrunde, eine Armatur zu schaffen, mit der das Verbinden des Durchflußrohrs mit dem angrenzenden Bauteil in einer Vielzahl von Ausrichtungen möglich ist und die zum anderen einfach herzustellen ist.

Diese Aufgabe wird durch den Gegenstand des Anspruchs 1 gelöst. Vorteilhafte Ausgestaltungen sind in den Unteransprüchen angegeben.

Die Erfindung geht von dem Grundgedanken aus, den Befestigungsmitteln zum Befestigen des Flansches an dem angrenzenden Bauteil Bewegungsraum im Verhältnis zum Flansch zu geben, also keinen fest vorgegebenen, einzigen Angriffspunkt für das jeweilige Befestigungsmittel vorzusehen, sondem für das Befestigungsmittel ein Langloch vorzusehen, in dem das Befestigungsmittel relativ zum Flansch bewegt werden kann.

Die Befestigung der Armatur an dem angrenzenden Bauteil erfolgt durch ein axiales Verspannen des Flansches zwischen einem Befestigungspunkt für das Befestigungsmittel an dem angrenzenden Bauteil und einem Befestigungspunkt an dem Flansch. Dafür ist es jedoch unerheblich, ob das Befestigungsmittel und der Flansch im nicht verspannten Zustand senkrecht zur Längsachse des Befestigungsmittels zueinander beweglich sind oder nicht. Die im Stand der Technik vorgesehenen Durchgangsbohrungen, die eine derartige Festlegung bewirken, werden erfindungsgemäß durch Langlöcher ersetzt, so daß erfindungsgemäß erstmals eine Beweglichkeit des durch den Flansch durchgeführten Befestigungsmittel relativ zum Flansch im nicht verspannten Zustand geschaffen wird. Diese Beweglichkeit senkrecht zur Längsachse des Befestigungsmittels erlaubt es nun, die Armatur relativ zum angrenzenden Bauteil in die gewünschte Einbaulage zu bringen und erst dann durch Verspannen des Befestigungsmittels (beispielsweise durch Festziehen einer Befestigungsschraube), die rotatorische bzw. translatorische (senkrecht zur Längsachse des Befestigungsmittels ausgerichtete) Bewegungsfreiheit aufzugeben.

Die erfindungsgemäße Armatur weist ein Durchflußrohr auf, durch das Flüssigkeit zu dem angrenzenden Bauteil fließen kann. Dabei ist die Erfindung nicht auf konkrete Ausbildungsformen des Durchflußrohrs beschränkt. Das Durchflußrohr kann starr, beispielsweise ein Metallrohr sein, kann jedoch beispielsweise auch flexibel, insbesondere schlauchartig sein. Das Durchgangsrohr kann eine große Längserstreckung aufweisen. Es kann jedoch auch ein Übergangsbereich nach der Art der EP 0 831 265 B1 sein, der an seiner dem Flansch gegenüberliegenden Seite Befestigungsmöglichkeiten für einen Schlauch oder eine weitere Leitung aufweist, wie beispielsweise Gewinde oder einen profilierten Bereich. Ferner ist gemäß der Erfindung die axiale Erstreckung des Durchflußrohrs nicht eingeschränkt. Es können gerade verlaufende Durchflußrohre oder auch solche eingesetzt werden, die einen Rohrbogen enthalten.

Als erfindungsgemäß vorgesehenes Langloch wird ein Loch verstanden, dessen Ausmaß deutlich größer ist, als das Ausmaß des in das Langloch eingeführten Befestigungsmittels. Insbesondere bevorzugt ist das Langloch nur in zwei gegenüberliegende Richtungen größer als das Befestigungsmittel, so daß das Befestigungsmittel im wesentlichen nur in zwei Richtungen in dem Langloch bewegt werden kann, wobei als Richtungen hier auch Bögen verstanden werden. Es ist jedoch auch denkbar, das Langloch zusätzlich auch in andere Richtungen größer als das Befestigungsmittel auszugestalten, solange gewährleistet ist, daß eine axiale Verspannung des Flansches mit dem an ihn angrenzenden Bauteil mittels axialen Verspannens des Befestigungsmittels erreicht werden kann, beispielsweise durch das Unterlegen einer Unterlegscheibe unter den Schraubenkopf.

In einer bevorzugten Ausführungsform ist das Langloch bogenförmig ausgebildet. Dies ist insbesondere bei der Verwendung einer derartigen Armatur zur Befestigung an anderen Bauteilen zweckmäßig, bei denen die angrenzenden Bauteile Befestigungspunkte für Befestigungsmittel aufweisen, die auf einem Kreis angeordnet sind, wie beispielsweise dem Lochkreis einer Zahnradpumpe. Je nach Ausbildung der Befestigungspunkte des angrenzenden Bauteils und der gewünschten Bewegungsrichtung des Flansches relativ zu diesen Befestigungspunkten können die Langlöcher jedoch auch andere Erstreckungen aufweisen, beispielsweise geradlinig verlaufen.

In einer bevorzugten Ausführungsform weist die erfindungsgemäße Armatur eine Anzahl n-Langlöcher auf, beispielsweise vier. Ein besonders leichtes Befestigen der Armatur mit dem angrenzenden Bauteil erfolgt dann, wenn sich das jeweilige Langloch über ein Winkel von nahezu 360°/n erstreckt. Hier ist zu berücksichtigen, daß die Langlöcher für eine maximale Beweglichkeit möglichst lang auszugestalten sind, die verbleibenden Stege zwischen den vorzugsweise auf einer gleichen Umfangslinie des Flansches vorgesehenen Langlöcher jedoch hinreichend stark ausgebildet werden.

In einer bevorzugten Ausführungsform weist der Flansch auf seiner dem angrenzenden Bauteil zugewandten Seite Dichtungselemente auf. Dies kann insbesondere ein in einer Ausnehmung vorgesehener O-Ring sein.

In einer bevorzugten Ausführungsform ist der Flansch fest mit dem Durchflußrohr verbunden, auch wenn zur Bereitstellung einer besonders hohen Beweglichkeit auch lose Verbindungen zwischen dem Durchflußrohr und dem Flansch vorgesehen werden können, wie sie beispielsweise in EP 0831 265 B1 beschrieben werden. Das feste Verbinden des Flansches mit dem Durchflußrohr erfolgt vorzugsweise mittels Kupferlöten.

Die erfindungsgemäße Armatur wird insbesondere bevorzugt zum Verbinden einer Leitung mit einer Pumpe, insbesondere mit einer Zahnradpumpe eingesetzt. Gerade beim Verbinden von Leitungen mit Pumpen, insbesondere Zahnradpumpen hat es sich gezeigt, daß dies häufig in sehr beengten Einbauverhältnissen erfolgt. Gerade in derart beengten Einbauverhältnissen ist es von besonderem Vorteil, wenn die Armatur ein Befestigen der Leitung mit der Pumpe ermöglicht, auch wenn die Leitung nicht in der durch die Befestigungspunkte an der Pumpe vorgesehenen besonderen Ausrichtung zur Pumpe steht.

Beim Verbinden von Leitungen mit angrenzenden Bauteilen, beispielsweise Aggregaten, insbesondere beim Verbinden von Leitungen mit Pumpen, wie beispielsweise Zahnradpumpen, besteht die Besonderheit, daß die räumliche Anordnung des angrenzenden Bauteils und der Leitung meist durch den Zusammenbau der Anlage festgelegt ist und die sie verbindende Armatur meist als letztes montiert wird. Die Verwendung der erfindungsgemäßen Armatur erlaubt es, Fehltoleranzen beim Einbau des angrenzenden Bauteils und der mit ihm zu verbindenden Leitung auszugleichen. Hierfür wurden in der Vergangenheit häufig in kostspieliger Welse Paßstücke vor Ort angefertigt, die einen Ausgleich der Fehtertoleranzen auch bei Armaturen erlaubten, die nur in einer festgelegten Ausrichtung montiert werden konnten. Teilweise wurde auch die Leitung durch Krafteinwirkung in die durch die festgelegte Armatur vorgegebene Position bewegt und dort befestigt. Dies führt jedoch zu einem Spannungseintrag in die Verbindungen, der die Lebensdauer der Verbindung reduziert.

Insbesondere bevorzugt wird die erfindungsgemäße Armatur in Hydrauliksystemen verwendet. Bei Hydrauliksystemen kann auf der Druckseite einer Pumpe ein Druck von 300 bar oder mehr anliegen. Dies stellt besondere Anforderungen an die Dichtigkeit der Verbindungen. Die erfindungsgemäße Armatur erlaubt im Verhältnis zu der aus EP 0 831 265 B1 bekannten Armatur eine besser dichtenden Verbindung mit dem angrenzenden Bauteil, insbesondere wenn der Flansch in einer bevorzugten Ausführungsform mit dem Durchflußrohr fest verbunden ist.

Insbesondere bevorzugt wird die Armatur bei Nennweiten von 25 bis 250 mm Durchmesser, insbesondere bevorzugt bei 100 mm Durchmesser eingesetzt. In diesem Durchmesserbereich werden Leitungen häufig ohne spezielle Abstützung montiert, so daß hier die Fehlertoleranzen besonders groß sind. Leitungen von Nennweiten um 500 mm Durchmesser oder mehr weisen dieses Problem häufig nicht auf, insbesondere auch aufgrund der Eigensteifigkeit einer Leitung mit einer derartigen Nennweite, die ein Durchbiegen der Leitung und damit eine Fehltoleranz bereits verhindert.

Nachfolgend wird die Erfindung anhand einer lediglich ein Ausführungsbeispiel darstellenden Zeichnung näher erläutert. Darin zeigen:
Fig. 1 eine erfindungsgemäße Armatur in einer teilweise geschnittenen Seitenansicht und
Fig. 2 die Armatur gemäß Fig. 1 in einer Frontalsicht.

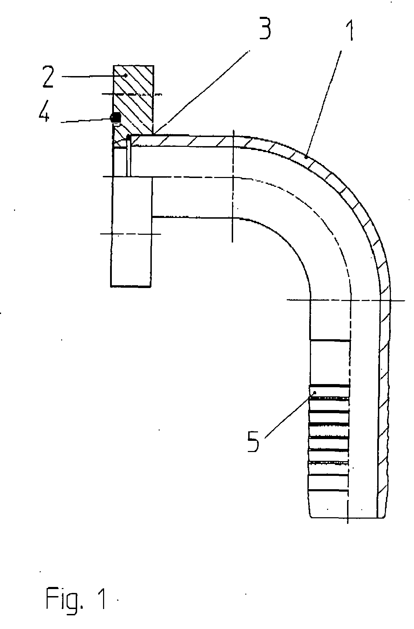

Die in Fig. 1 dargestellte erfindungsgemäße Armatur weist ein Durchflußrohr 1 und einen Flansch 2 auf. Durchflußrohr 1 und Flansch 2 sind an der mit 3 bezeichneten Stelle über den ganzen Umfang des Durchflußrohrs 1 miteinander kupferhart gelötet.

Auf der dem nicht dargestellten angrenzenden Bauteil zugewandten Seite des Flansches 2 ist als Dichtungselement ein O-Ring 4 vorgesehen, der in einer Ausnehmung des Flansches 2 angeordnet ist.

An seinem freien Ende weist das Durchflußrohr 1 eine Profilierung 5 zum Verbinden mit einer Leitung auf.

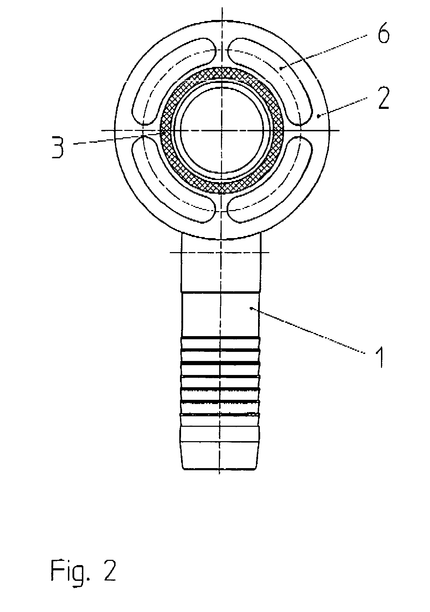

Wie Fig. 2 zu entnehmen ist, sind in dem Flansch 2 vier Langlöcher 6 ausgebildet. Die Langlöcher sind bogenförmig ausgebildet und erstrecken sich über nahezu 360°/4 = 90°.

Die Langlöcher 6 erlauben es, daß eine an das nicht dargestellte angrenzende Bauteil angesetzte erfindungsgemäße Armatur in einer Vielzahl von Ausrichtungen des gebogenen Durchflußrohrs 1 relativ zu dem nicht näher dargestellten angrenzenden Bauteil an es angesetzt werden kann und fest mit dem angrenzenden Bauteil verbunden werden kann. Hierzu werden als Befestigungsmittel Schrauben durch die Langlöcher 6 geführt, die in Gewindebohrungen in dem angrenzenden Bauteil eingeschraubt werden.

Die erfindungsgemäße Armatur besteht aus wenigen Bauteilen, die in einfacher Weise zusammengefügt werden können und ermöglicht so ein einfach herzustellendes Bauteil, das ein großes Maß an Freiheit bezüglich der Ausrichtung des Durchgangsrohrs 1 relativ zu den an dem angrenzenden Bauteil vorgesehenen Befestigungspunkten aufweisen kann.

## Patentansprüche

1. Armatur mit einem Durchflußrohr (1) und einem Flansch (2) zum Verbinden des ersten Endes des Durchflußrohrs (1) mit einem angrenzenden Bauteil, **dadurch gekennzeichnet, daß** der Flansch (2) mindest ein Langloch (6) für ein Befestigungsmittel zum Befestigen des Flansches an dem angrenzenden Bauteil aufweist.

2. Armatur nach Anspruch 1, **dadurch gekennzeichnet, daß** das Langloch (6) bogenförmig ausgebildet ist.

3. Armatur nach Anspruch 2, **dadurch gekennzeichnet, daß** n-Langlöcher vorgesehen sind und sich ein Langloch über einen Winkel von nahezu 360°/n erstreckt.

4. Armatur nach einem der Ansprüche 1 bis 3, **dadurch gekennzeichnet, daß** der Flansch (2) auf seiner dem angrenzenden Bauteil zugewandten Seite Dichtungselemente aufweist.

5. Armatur nach einem der Ansprüche 1 bis 4, **dadurch gekennzeichnet, daß** der Flansch (2) durch Kupferlöten mit dem Durchflußrohr (1) verbunden ist.

6. Verwendung einer Armatur nach einem der Ansprüche 1 bis 4 für das Verbinden einer Leitung mit einer Pumpe.

7. Verwendung einer Armatur nach einem der Ansprüche 1 bis 4 für das Verbinden einer Leitung mit einer Zahnradpumpe.
